# EUROPÄISCHE PATENTSCHRIFT

(11) **EP 3 691 888 B1**
(45) Veröffentlichungstag und Bekanntmachung des Hinweises auf die Patenterteilung: **10.04.2024**
(21) Anmeldenummer: 18781950.3
(22) Anmeldetag: 18.09.2018
(51) Int. Cl.: B32B 13/12, B32B 27/30, B32B 27/36, B32B 27/40, F24D 13/02

(54) **AUSBAUPLATTE MIT EINEM FLÄCHIGEN HEIZELEMENT**
FINISHING BOARD WITH A PLANAR HEATING ELEMENT
PANNEAU DE CONSTRUCTION COMPRENANT UN ÉLÉMENT CHAUFFANT PLAT

(30) Priorität: 06.10.2017 AT 508592017
(43) Veröffentlichungstag der Anmeldung: 12.08.2020
(73) Patentinhaber: Naxis New Energy Concepts GmbH, 1030 Wien (AT)
(72) Erfinder: LINDENBERG, Josef, 9020 Klagenfurt (AT); HARRICH, Johannes, 9020 Klagenfurt (AT)
(74) Vertreter: Babeluk, Michael
(86) Internationale Anmeldenummer: PCT/AT2018/060217
(87) Internationale Veröffentlichungsnummer: WO 2019/068120

(56) Entgegenhaltungen:
- DE-U1-202006 007 729

## Beschreibung

Die Erfindung betrifft eine Ausbauplatte mit einem flächigen Heizelement für den Innenraumausbau, aufweisend eine Gipskartonplatte, die einen zwischen einer ersten und einer zweiten Kartonlage angeordneten Gipskern aufweist, sowie ein Flächenheizelement mit einer über seitliche Anschlusselektroden kontaktierten, elektrisch betreibbaren Heizschicht, die auf der Oberfläche zumindest einer Kartonlage aufgetragen ist, sowie ein Verfahren zu deren Herstellung.

In diesem Zusammenhang ist aus der WO 2007/131705 A1, die die Priorität der DE 20 2006 007 729 U1 beansprucht, ein elektrisch betreibbares Flächenheizelement, insbesondere zur Verwendung zum Wandaufbau eines Gebäudeinnenraums bekannt geworden, wobei eine entsprechende Wandheizplatte in einer Sandwichanordnung aus einer ersten Gipskartonplatte (im verlegten Zustand an der Rückseite), aus einer zweiten Gipskartonplatte (im verlegten Zustand die raumseitige Sichtseite) und einer zwischen den beiden Gipskartonplatten eingebetteten Heizfolie besteht. Im fertigen Zustand sind somit die erste Gipskartonplatte, die Heizfolie und die zweite Gipskartonplatte fest miteinander verbunden. Die Wandheizplatte kann in Raumhöhe ausgeführt sein, wobei die Heizfolie in mehrere Heizfelder unterteilt ist und seitlich flache Elektrodenstreifen aufweist, die für die elektrische Kontaktierung der Heizfolie dienen. Gemäß einer Ausführungsvariante kann die Wandheizplatte auch aus einer Gipskartonplatte als Basisträger und einer darauf angebrachten Heizfolie bestehen, die ebenfalls in Teilheizfelder unterteilt sein kann und seitliche Kupferstreifen zur elektrischen Kontaktierung aufweist. Auf der Heizfolie ist eine Kaschierfolie als Schutz- und Isolierfolie angebracht, auf deren Sichtseite das Flächenmuster entsprechend dem darunter liegenden Teilheizfeldern und Kupferstreifen aufgedruckt ist.

Die SK 422 016 U1 beschreibt eine vorgefertigte Platte mit integrierter Heizung, die aus einer Trägerplatte, einer Infrarot-Heizfolie, einer reflektierenden Folie und einer Abdeckplatte besteht. Die Trägerplatte und die Abdeckplatte können als Holzplatte, Zement- oder Gipsplatte ausgeführt sein, wobei die Infrarot-Heizfolie eine im Handel erhältliche Heizfolie ist, die in ihren Abmessungen gleich oder kleiner ist als die Trägerplatte und in die Auflage integriert sein kann. Die Infrarot-Heizfolie und gegebenenfalls die reflektierende Folie werden zwischen der Trägerplatte und der Abdeckplatte angeordnet, wobei die Trägerplatte und die Deckplatte miteinander durch einen Kleber oder/und mechanisch verbunden sind.

Aus der FR 2 870 078 A1 ist eine Deckenheizung bekannt, die auf einer Gipskartonplatte angeordnete elektrische Strahlungsheizelemente aufweist, die von Isolierplatten gleicher Dimension wie die Heizelemente abgedeckt sind.

Aus der DE 10 2009 057 874 A1 ein Verbundelement mit einer Heizeinrichtung bekannt, bei welchem zwischen einer oberen und einer unteren Deckplatte ein flächiges Heizelement angeordnet ist. Die obere Deckplatte besteht aus einem gut wärmeleitenden Material, bevorzugt aus Aluminium. Weiters ist zumindest eine Zwischenschicht aus Kunststoff vorgesehen, die an einer der beiden Seiten des Heizelements angeordnet ist.

Weiters ist aus der WO 2011/055330 A1 ein Heizpaneel auf der Basis einer Gipskartonplatte bekannt geworden. Es wird darin ein Herstellungsverfahren beschrieben, bei welchem auf eine erste Lage eines Bahnmaterials kontinuierlich eine aushärtende Schicht (z.B. Gipsschicht) aufgetragen wird, wobei vor der Aufbringung des oberen Bahnmaterials ein flächiges Heizelement eingebracht wird. Das Heizelement kann unterschiedlichste Strukturen aufweisen, wobei gemäß einer Ausführungsvariante auch das Bedrucken der Innenseite der oberen Materialbahn mit einer elektrischen Widerstandsschicht als Heizelement vorgesehen ist.

Durch Langzeituntersuchungen konnte festgestellt werden, dass der Kontakt der Heizfolien bzw. Heizschichten der flächigen Heizelemente mit der Kartonschicht der Gipskartonplatten herkömmlicher Heizpaneele im Laufe der Zeit zu Versprödungen und Rissbildungen führen kann, welche mit einem empfindlichen Abfall der Heizleistung einhergehen und zum Totalausfall der Heizpaneele führen können.

Aufgabe der vorliegenden Erfindung ist es, eine Ausbauplatte mit einem flächigen Heizelement für den Innenausbau basierend auf dem eingangs erwähnten Stand der Technik derart zu verbessern, dass trotz einer einfachen Herstellung der Ausbauplatten die ursprüngliche Heizleistung der Heizelemente möglichst lange gewährleistet werden kann und Totalausfälle vermieden werden können.

Diese Aufgabe wird erfindungsgemäß dadurch gelöst, dass das Flächenheizelement zwischen dem Gipskern und der inneren Oberfläche einer der beiden Kartonlagen angeordnet und dadurch direkt in die Gipskartonplatte integriert ist, wobei zwischen der Heizschicht und der Oberfläche der Kartonlage eine Zwischenschicht angeordnet ist, die als Sperrschicht gegen den Stofftransport zwischen der Heizschicht und der Kartonlage ausgebildet ist.

Ein erfindungsgemäßes Verfahren zur Herstellung einer derartigen Ausbauplatte zeichnet sich dadurch aus, dass vor der Aufbringung einer Heizschicht des flächigen Heizelements auf die Oberfläche einer der Kartonbahnen eine Zwischenschicht aufgedruckt, aufgesprüht oder aufkaschiert wird, die als Sperrschicht gegen den Stofftransport zwischen der Heizschicht und der Kartonbahn dient.

Die erfindungsgemäße Zwischenschicht stoppt die Migrations- und Diffusionsvorgänge zwischen der Heizschicht und der Papier- bzw. Kartonschicht der Gipskartonplatte, sodass Versprödungen und Rissbildungen über lange Zeiträume vermieden werden können. Das führt dazu, dass die Heizleistung der Heizpaneele länger konstant gehalten werden kann.

Erfindungsgemäß ist das Flächenheizelement zwischen dem Gipskern und der inneren Oberfläche einer der beiden Kartonlagen angeordnet und dadurch direkt in die Gipskartonplatte integriert.

Insbesondere bei dieser Ausführungsvariante kann es von Vorteil sein, wenn zwischen dem Gipskern und der Heizschicht des Flächenheizelements eine weitere Zwischenschicht angeordnet ist, die als Sperrschicht gegen den Stofftransport zwischen der Heizschicht und dem Gipskern ausgebildet ist. Die Heizschicht ist somit beidseitig durch Sperrschichten vor Migrations- und Diffusionsvorgängen geschützt, wodurch ein langjähriger, störungsfreier Betrieb der Heizpaneele gewährleistet ist.

Die Zwischenschicht ist bevorzugt eine Polymerschicht und besteht beispielsweise aus Polyurethan, Acryl, Polyester oder anderen Kunststoffschichten zur Vermeidung von Migrations- und Diffusionsvorgängen, mit einer Schichtdicke von 5 µm bis 200 µm, vorzugsweise von 10 µm bis 50 µm.

Erfindungsgemäß ist die der Kartonlage zugewandte Zwischenschicht zumindest im Bereich der Heizschicht auf die Oberfläche der Kartonlage aufgedruckt, als Lackschicht aufgetragen oder als Folie aufkaschiert.

Die weitere Zwischenschicht kann direkt auf die Heizschicht des Flächenheizelements aufgedruckt oder aufgesprüht werden oder auch als Folie aufkaschiert sein.

Die Erfindung wird im Folgenden anhand von zum Teil schematischen Zeichnungen näher erläutert. Es zeigen:
- Fig. 1: eine erste Ausführungsvariante der erfindungsgemäßen Ausbauplatte in einer Explosionsdarstellung;
- Fig. 2: eine zweite Ausführungsvariante der erfindungsgemäßen Ausbauplatte in einer Explosionsdarstellung;
- Fig. 3: eine Ausbauplatte gemäß dem Stand der Technik in einer Explosionsdarstellung;
- Fig. 4: eine Vorrichtung zur Herstellung einer erfindungsgemäßen Ausbauplatte;
- Fig. 5: ein Detail der erfindungsgemäßen Ausbauplatte in einer Draufsicht; sowie
- Fig. 6: einen Schnitt durch die Ausbauplatte gemäß Fig. 5 entlang der Linie VI-VI.

Funktionsgleiche Teile sind in den einzelnen Ausführungsvarianten mit gleichen Bezugszeichen versehen.

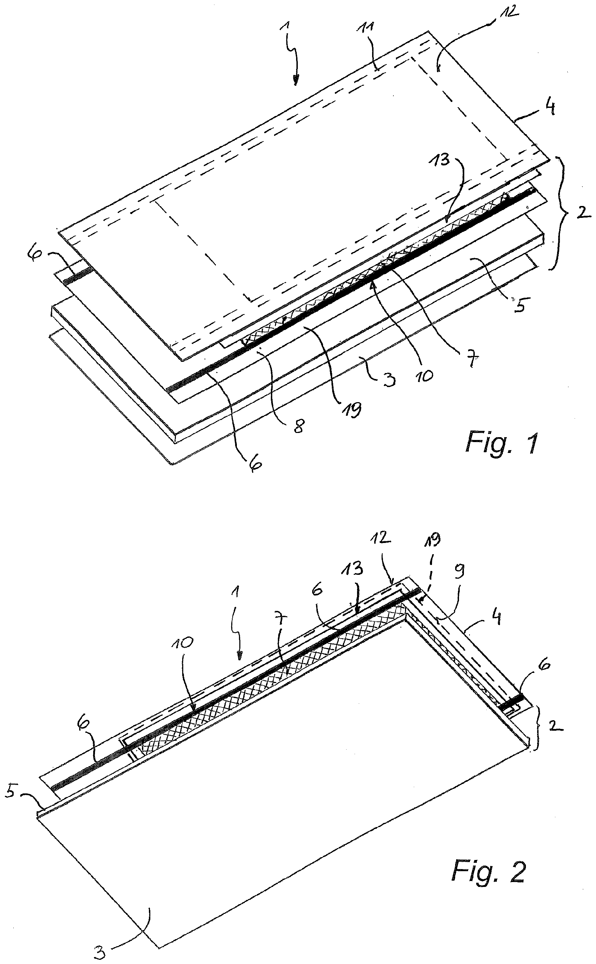

Die in Fig. 1 dargestellte Ausbauplatte 1 mit einem integrierten, flächigen Heizelement 10 für den Innenraumausbau basiert auf einer herkömmlichen Gipskartonplatte 2 und kann mit den marktüblichen Außenabmessungen und Wandstärken hergestellt werden, sodass die erfindungsgemäße Ausbauplatte mit derartigen Gipskartonplatten weitgehend kompatibel ist und in gleicher Weise verarbeitet werden kann.

Die Gipskartonplatte 2 besteht im Wesentlichen aus einer ersten Kartonlage 3 (Basislage) und einer zweiten Kartonlage 4 (raumseitige Kartonlage), zwischen welchen ein Gipskern 5 angeordnet ist. Das Heizelement 10 weist flache, seitliche Anschlusselektroden 6 aus einem Material mit guter Leitfähigkeit auf (beispielsweise Bänder aus Kupfer- oder Silbermaterial sowie leitfähige Legierungen und Stoffgemische, die bevorzugt mittels Drucktechniken aufbringbar sind), die die elektrisch betreibbare Heizschicht 7 aus einem elektrischen Widerstandsmaterial kontaktieren.

Die Heizschicht 7 des Flächenheizelementes 10 kann beispielsweise aus einem druckfähigen, pastösen Material mit elektrisch leitfähigen Partikeln, wie Graphit, Carbon- Fasern, etc. oder nanoskaligen Partikeln wie Carbon-Nanotubes, Graphen, etc. bestehen und auf eine Trägerfolie 8 aufgetragen sein.

Zur Unterbindung von Diffusions- und Migrationsvorgängen, insbesondere von Bestandteilen der Heizschicht 7 in die Kartonlage 4, ist zwischen diesen beiden Bauteilen eine Zwischenschicht 13 angeordnet, die als Sperrschicht gegen den Stofftransport zwischen der Heizschicht 7 und der Kartonlage 4 ausgebildet ist.

Weiters kann die Trägerfolie 8 als Sperrschicht 19 ausgebildet sein, die zwischen dem Gipskern 5 und der Heizschicht 7 des Flächenheizelements angeordnet ist und zur Unterbindung des Stofftransports zwischen der Heizschicht 7 und dem Gipskern 5 dient.

Die Heizschicht 7 (und die Zwischenschichten 13 bzw. 19) können sich auch über die gesamte Länge der Gipskartonplatte 2 erstrecken, so dass die in den Fig. 1 und Fig. 2 dargestellten freien Bereiche an den Schmalseiten entfallen. Weiters kann auch die Breite des Heizelements 10 je nach gewünschter Heizleistung variiert werden, so dass freie Bereiche an den Längsseiten breiter oder schmäler ausgebildet werden. Weiters kann die Heizschicht 7 in einzelne Teilfelder unterteilt sein.

Beispielsweise kann das Flächenheizelement 10 zwischen dem Gipskern 5 und der nach der Montage der Ausbauplatte 1 raumseitig ausgerichteten Kartonlage 4 angeordnet sein. Durch diese Anordnung ist mit einer verzögerungsfreien Raumaufheizung zu rechnen. Von Vorteil ist es dabei, wenn der Gipskern 5 zur Erhöhung der Wärmedämmung Additive, wie mikroporöse Partikel, beispielsweise Perlite, Vermiculite, Blähgläser oder Schaumbildner, aufweist.

Es wäre allerdings auch möglich, das Flächenheizelement 10 zwischen dem Gipskern 5 und der rückseitigen Kartonlage 3 anzuordnen, um den Speichereffekt und die Wärmeverteilung durch den Gipskern 5 auszunutzen. Von Vorteil kann es dabei sein, wenn der Gipskern 5 zur Erhöhung der Wärmeleitfähigkeit Additive, wie beispielsweise Graphit, Carbon- Fasern, Graphen, Carbon-Nanotubes, oder andere die Wärmeleitung verbessernde Materialien aufweist.

Das Flächenheizelement 10 kann entweder gemäß Fig. 1 auf einer Trägerfolie 8 angeordnet sein, die gleichzeitig als Sperrschicht dient, oder - besonders vorteilhaft - auf der dem Gipskern 5 zugewandten inneren Oberfläche 9 der Kartonlage 4 fixiert, beispielsweise aufgeklebt oder aufgedruckt, sein (siehe Fig. 2), wobei zuvor auf der inneren Oberfläche 9 die Zwischenschicht 13 aufgetragen wird. Beispielsweise kann die Heizschicht 7 auf die Zwischenschicht 13 an der Innenseite 9 der Kartonlage 4 aufgedruckt werden und ein elektrisch leitendes Folienband als Anschlusselektrode 6 beidseitig der Heizschicht 7 mit einem leitfähigen Kleber aufgeklebt werden.

Auch bei der Variante gemäß Fig. 2 kann eine weitere Zwischenschicht 19 (strichliert und durchsichtig angedeutet) vorgesehen sein, um als Sperrschicht zwischen der Heizschicht 7 und dem Gipskern 5 zu dienen. Die weitere Zwischenschicht 19 kann auf die Heizschicht 7 des Flächenheizelements 10 aufgedruckt, aufgesprüht oder als Folie aufkaschiert sein.

Die Heizschicht 7 ist bevorzugt streifen- oder netzförmig zwischen den Anschlusselektroden 6 ausgebildet und weist diffusionsoffene Zonen beliebiger Geometrie (Kreise, Quadrate, Dreiecke, Rauten, etc.) auf, die beispielsweise ein regelmäßiges Muster bilden und deren Gesamtfläche bevorzugt größer ist als die Gesamtfläche des Widerstandsmaterials der Heizschicht 7. Dies trägt dazu bei, dass die Gipskartonplatten bei der Herstellung rascher austrocknen können.

Bei der erfindungsgemäßen Ausbauplatte gemäß Fig. 1 und Fig. 2 kann das Flächenheizelement praktisch "endlos" von einer Rolle direkt im Herstellungsprozess für Gipskartonplatten zugeführt werden.

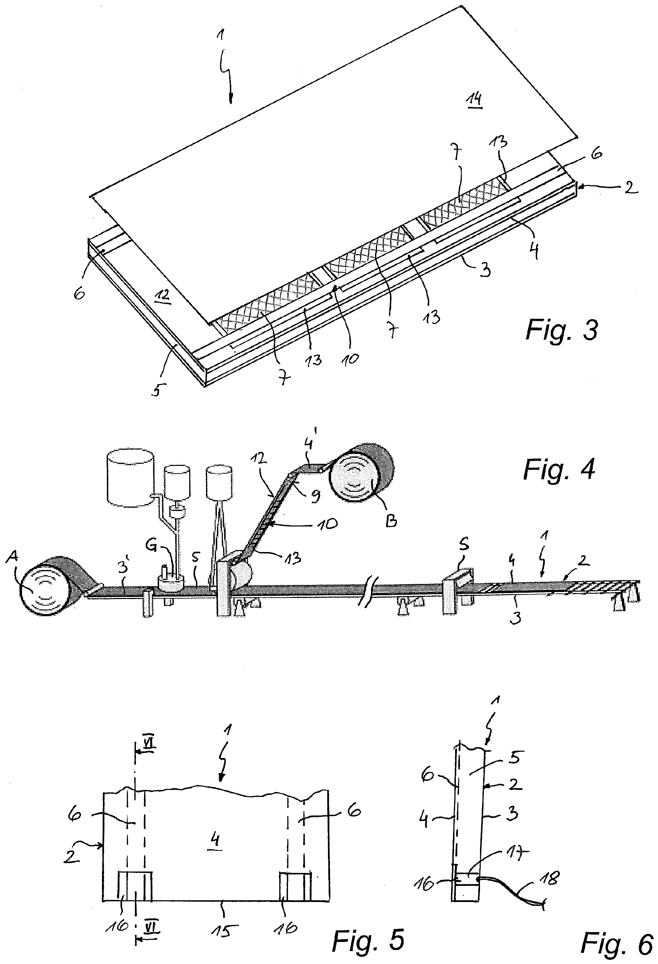

Das elektrische Flächenheizelement 10 ist gemäß einer in Fig. 3 dargestellten Ausführungsvariante nach dem Stand der Technik außen an einer Gipskartonplatte 2 angeordnet. Dabei befindet sich das Flächenheizelement 10 an der äußeren Oberfläche 12 einer der beiden Kartonlagen 3, 4 und ist von einer Deckschicht 14, beispielsweise aus einem Vliesmaterial, abgedeckt. Die Heizschicht 7 kann in einzelne Heizfelder unterteilt sein, die jeweils auf einer Teilfläche der Zwischenschicht 13 aufgebracht, beispielsweise aufgedruckt sind.

Gemäß dem in Fig. 4 skizzierten Herstellungsverfahren wird zunächst eine untere Kartonbahn 3' (die bei der fertigen Ausbauplatte die Kartonlage 3 bildet) von einer Rolle A zugeführt und in der Position G eine Gipsmasse aufgetragen und gleichmäßig verteilt. Danach wird von einer Rolle B eine zweite Kartonbahn 4' (die bei der fertigen Ausbauplatte die Kartonlage 4 bildet) aufgebracht, auf dessen Innenseite 9 bereits vorher die Zwischenschicht 13 und das Flächenheizelement 10, bestehend aus der Heizschicht 7 und den Anschlusselektroden 6 aufgedruckt wurden. Die zweite Kartonbahn 4' kann ohne Änderungen an der bestehenden Vorrichtung mitsamt der Zwischenschicht und dem Flächenheizelement 10 in einem Arbeitsschritt auf den noch weichen Gipskern 5 aufgebracht werden. Danach werden die Ausbauplatten 1 in der Position S geschnitten und anschließend getrocknet. Die Heizschicht 7 auf der zweiten Kartonbahn 4' kann auch mit einer weiteren Zwischenschicht 19 (siehe Fig. 2) abgedeckt sein, um die Heizschicht 7 vor einem direkten Kontakt mit dem Gipskern 5 zu schützen.

Das Flächenheizelement 10 ist beim Stand der Technik in ähnlicher Weise auf der äußeren Oberfläche 12 der Kartonbahn 4' aufkaschiert, aufgeklebt oder aufgedruckt sein, wobei im selben Arbeitsgang eine Deckschicht 14 (siehe Fig. 3) aufgetragen wird.

Ohne große Änderungen an bestehenden Anlagen zur Herstellung von Gipskartonplatten kann das Flächenheizelement 10 auch mit Hilfe einer Trägerfolie 8 bzw. der Zwischenschicht 19 aufgebracht werden, welche von einer separaten Rolle zugeführt wird.

Die Zwischenschichten 13 und 19 und ggf. die Heizschicht 7 weisen zumindest in Teilbereichen gleichmäßig verteilte Durchgangsöffnungen in Form einer Perforation auf, sodass die beiden Schichten für Wasserdampf durchlässig sind. Dadurch kann die Ausbauplatte 1 beim Herstellungsprozess gleichmäßig nach allen Seiten austrocknen, sodass die einzelnen Arbeitsschritte und Prozessabläufe in einer herkömmlichen Vorrichtung zur Herstellung von Gipskartonplatten nur unwesentlich adaptiert werden müssen.

Die Ausbauplatte 1 kann an der äußeren Oberfläche 12 der Kartonlage 4 eine Kennzeichnung, beispielsweise eine Farbkennung, aufweisen, die die Heizleistung des Flächenheizelements 10 kennzeichnet. Bevorzugt erfolgt der Betrieb im Niederspannungsbereich < 48 Volt. Beispielsweise kann die Farbe Grün auf einen Betrieb mit 24 Volt und die Farbe Rot auf einen Betrieb mit 36 Volt hinweisen.

Weiters kann erfindungsgemäß an der Oberfläche 12 der Ausbauplatte 1 eine Markierung 11 angeordnet sein, die die Form und die Erstreckung der innenliegenden Heizschicht 7 und der Anschlusselektroden 6 sichtbar macht. Damit wird die Montage der Ausbauplatte 1 erleichtert, da für die Verschraubung Bereiche ausgewählt werden können, die außerhalb der sensiblen Bereiche liegen.

Für die elektrische Kontaktierung der seitlichen Anschlusselektroden 6 können an einer schmalen Seitenkante 15 einer Ausbauplatte 1 Freistellungen 16 in der Kartonlage 4 hergestellt werden, die gemäß Fig. 5 den Endbereich der flachen Anschlusselektroden 6 frei legen, bzw. mitsamt des seitlich eingeschnittenen Teils der Kartonlage 4 hochgeklappt werden.

Danach kann dieser freigelegte Bereich durch eine Klemm-, Löt- oder Steckverbindung 17 an die Stromversorgung 18 angeschlossen werden. Bei raumhohen Ausbauplatten 1 erfolgt dieser Anschluss bevorzugt im Sockelbereich und wird nach Herstellung der Anschlüsse durch eine Sockelleiste abgedeckt, wobei auch die elektrischen Versorgungs- und Steuerleitungen in der Sockelleiste geführt werden können.

## Patentansprüche

1. Ausbauplatte (1) mit einem flächigen Heizelement für den Innenraumausbau aufweisend:
- eine Gipskartonplatte (2), die einen zwischen einer ersten (3) und einer zweiten Kartonlage (4) angeordneten Gipskern (5) aufweist, sowie
- ein Flächenheizelement (10) mit einer über seitliche Anschlusselektroden (6) kontaktierten, elektrisch betreibbaren Heizschicht (7), die auf der Oberfläche zumindest einer Kartonlage (3, 4) aufgetragen ist,
**dadurch gekennzeichnet, dass**
- das Flächenheizelement (10) zwischen dem Gipskern (5) und der inneren Oberfläche einer der beiden Kartonlagen (3, 4) angeordnet und dadurch direkt in die Gipskartonplatte (2) integriert ist, wobei
- zwischen der Heizschicht (7) und der Oberfläche der Kartonlage (3, 4) eine Zwischenschicht (13) angeordnet ist, die als Sperrschicht gegen den Stofftransport zwischen der Heizschicht (7) und der Kartonlage (3, 4) ausgebildet ist.

2. Ausbauplatte (1) nach Anspruch 1, **dadurch gekennzeichnet, dass** zwischen dem Gipskern (5) und der Heizschicht (7) des Flächenheizelements (10) eine weitere Zwischenschicht (19) angeordnet ist, die als Sperrschicht gegen den Stofftransport zwischen der Heizschicht (7) und dem Gipskern (5) ausgebildet ist.

3. Ausbauplatte (1) nach einem der Ansprüche 1 oder 2, **dadurch gekennzeichnet, dass** die zumindest eine Zwischenschicht (13, 19) eine Polymerschicht, beispielsweise aus Polyurethan, Acryl oder Polyester, ist und eine Schichtdicke von 5 µm bis 200 µm, vorzugsweise von 10 µm bis 50 µm, aufweist.

4. Ausbauplatte (1) nach einem der Ansprüche 1 bis 3, **dadurch gekennzeichnet, dass** die der Kartonlage (3, 4) zugewandte Zwischenschicht (13) zumindest im Bereich der Heizschicht (7) auf die Oberfläche der Kartonlage (3, 4) aufgedruckt ist.

5. Ausbauplatte (1) nach einem der Ansprüche 1 bis 3, **dadurch gekennzeichnet, dass** die der Kartonlage (3, 4) zugewandte Zwischenschicht (13) zumindest im Bereich der Heizschicht (7) auf die Oberfläche der Kartonlage (3, 4) als Lackschicht aufgetragen ist.

6. Ausbauplatte (1) nach einem der Ansprüche 1 bis 3, **dadurch gekennzeichnet, dass** die der Kartonlage (3, 4) zugewandte Zwischenschicht (13) zumindest im Bereich der Heizschicht (7) auf die Oberfläche der Kartonlage (3, 4) als Folie aufkaschiert ist.

7. Ausbauplatte (1) nach einem der Ansprüche 2 bis 6, **dadurch gekennzeichnet, dass** die weitere Zwischenschicht (19) auf die Heizschicht (7) des Flächenheizelements (10) aufgedruckt, aufgesprüht oder als Folie aufkaschiert ist.

8. Ausbauplatte (1) nach einem der Ansprüche 1 bis 7, **dadurch gekennzeichnet, dass** die zumindest eine Zwischenschicht (13, 19) zumindest in Teilbereichen eine für Wasserdampf durchlässige Perforierung aufweist.

9. Ausbauplatte (1) nach einem der Ansprüche 1 bis 8, **dadurch gekennzeichnet, dass** die Heizschicht (7) des Flächenheizelementes (10) aus einem vorzugsweise druckfähigen Material mit elektrisch leitfähigen Partikeln, wie Graphit, Carbon- Fasern, oder nanoskaligen Partikeln wie Carbon-Nanotubes oder Graphen, besteht.

10. Ausbauplatte (1) nach einem der Ansprüche 1 bis 9, **dadurch gekennzeichnet, dass** die Heizschicht (7) streifen- oder netzförmig zwischen den Anschlusselektroden (6) ausgebildet ist und diffusionsoffene Zonen aufweist, deren Gesamtfläche bevorzugt größer als die Gesamtfläche des Widerstandsmaterials der Heizschicht (7) ist.

11. Ausbauplatte (1) nach einem der Ansprüche 1 bis 10, **dadurch gekennzeichnet, dass** der Gipskern (5) zur Erhöhung der Wärmeleitfähigkeit Additive, wie beispielsweise Graphit, Carbon-Fasern, Graphen oder Carbon-Nanotubes, aufweist.

12. Ausbauplatte (1) nach einem der Ansprüche 1 bis 11, **dadurch gekennzeichnet, dass** der Gipskern (5) zur Erhöhung der Wärmedämmung Additive, wie mikroporöse Partikel, beispielsweise Perlite, Vermiculite, Blähgläser oder Schaumbildner, aufweist.

13. Verfahren zur Herstellung einer Ausbauplatte (1) mit einem flächigen Heizelement für den Innenraumausbau, wobei zwischen zwei Kartonbahnen (3', 4') eine Gipsmasse zur Herstellung eines Gipskerns (5) eingebracht wird, **dadurch gekennzeichnet, dass** vor der Aufbringung einer Heizschicht (7) des flächigen Heizelements (10) auf die dem Gipskern (5) zugewandte Oberfläche (9) einer der Kartonbahnen (3', 4') eine Zwischenschicht (13) aufgedruckt, aufgesprüht oder aufkaschiert wird, die als Sperrschicht gegen den Stofftransport zwischen der Heizschicht (7) und der Kartonbahn (3', 4') dient.

14. Verfahren nach Anspruch 13, **dadurch gekennzeichnet, dass** auf die Heizschicht (7) des flächigen Heizelements (10) eine weitere Zwischenschicht (19) aufgedruckt, aufgesprüht oder aufkaschiert wird, die als Sperrschicht gegen den Stofftransport zwischen der Heizschicht (7) und dem Gipskern (5) dient.

## Claims

1. Finishing board (1) having a planar heating element for interior finishing, comprising:
- a plasterboard panel (2), which has a gypsum core (5) arranged between a first (3) and a second cardboard layer (4), and
- a surface heating element (10) having an electrically operable heating layer (7), which is contacted via lateral connection electrodes (6) and is applied to the surface of at least one cardboard layer (3, 4), **characterised in in that**
- the surface heating element (10) is arranged between the gypsum core (5) and the inner surface of one of the two cardboard layers (3, 4) and is thereby integrated directly into the gypsum plasterboard (2), wherein
- an intermediate layer (13) is arranged between the heating layer (7) and the surface of the cardboard layer (3, 4), which intermediate layer is designed as a barrier layer against mass transfer between the heating layer (7) and the cardboard layer (3, 4).

2. Finishing board (1) according to claim 1, **characterised in that** a further intermediate layer (19) is arranged between the gypsum core (5) and the heating layer (7) of the surface heating element (10), which is designed as a barrier layer against mass transfer between the heating layer (7) and the gypsum core (5).

3. Finishing board (1) according to one of claims 1 or 2, **characterised in that** the at least one intermediate layer (13, 19) is a polymer layer, for example of polyurethane, acrylic or polyester, and has a layer thickness of 5 µm to 200 µm, preferably of 10 µm to 50 µm.

4. Finishing board (1) according to one of claims 1 to 3, **characterised in that** the intermediate layer (13) facing the cardboard layer (3, 4) is printed onto the surface of the cardboard layer (3, 4) at least in the region of the heating layer (7).

5. Finishing board (1) according to one of claims 1 to 3, **characterised in that** the intermediate layer (13) facing the cardboard layer (3, 4) is applied as a lacquer layer to the surface of the cardboard layer (3, 4) at least in the region of the heating layer (7).

6. Finishing board (1) according to one of claims 1 to 3, **characterised in that** the intermediate layer (13) facing the cardboard layer (3, 4) is laminated onto the surface of the cardboard layer (3, 4) as a film at least in the region of the heating layer (7).

7. Finishing board (1) according to one of claims 2 to 6, **characterised in that** the further intermediate layer (19) is printed, sprayed or laminated as a film onto the heating layer (7) of the surface heating element (10).

8. Finishing board (1) according to one of claims 1 to 7, **characterised in that** the at least one intermediate layer (13, 19) has a perforation permeable to water vapor at least in partial areas.

9. Finishing board (1) according to one of claims 1 to 8, **characterised in that** the heating layer (7) of the surface heating element (10) consists of a preferably printable material with electrically conductive particles, such as graphite, carbon fibers, or nanoscale particles such as carbon nanotubes or graphene.

10. Finishing board (1) according to one of claims 1 to 9, **characterised in that** the heating layer (7) is formed in a strip or net shape between the connection electrodes (6) and has diffusion-open zones whose total area is preferably larger than the total area of the resistance material of the heating layer (7).

11. Finishing board (1) according to one of claims 1 to 10, **characterised in that** the gypsum core (5) has additives, such as graphite, carbon fibers, graphene or carbon nanotubes, to increase the thermal conductivity.

12. Finishing board (1) according to one of claims 1 to 11, **characterised in that** the gypsum core (5) comprises additives, such as microporous particles, for example perlite, vermiculite, expanded glass or foaming agents, to increase the thermal insulation.

13. Method for producing a finishing board (1) having a heating element for interior finishing, wherein a gypsum mass is introduced between two cardboard webs (3', 4') to produce a gypsum core (5), **characterised in that** before a heating layer (7) of the planar heating element (10) is applied to the surface (9) of one of the cardboard webs (3', 4') facing the gypsum core (5), an intermediate layer (13) is printed, sprayed or laminated on, which serves as a barrier layer against the mass transfer between the heating layer (7) and the cardboard web (3', 4').

14. Method according to claim 13, **characterised in that** a further intermediate layer (19) is printed, sprayed or laminated onto the heating layer (7) of the planar heating element (10), which layer serves as a barrier layer against the mass transfer between the heating layer (7) and the gypsum core (5).

## Revendications

1. Plaque d'aménagement (1) comportant un élément chauffant plat pour l'aménagement intérieur comprenant :
- une plaque de plâtre (2) comprenant un coeur en plâtre (5) entre une première (3) et une seconde couche de carton (4) ainsi que,
- un élément chauffant plat (10) comprenant une couche électrique chauffante (7), reliée par des électrodes de branchement (6), latérales, et qui est appliquée sur le dessus d'au moins une couche de carton (3, 4),
plaque **caractérisée en ce que**
- l'élément chauffant plat (10) est compris entre le coeur en plâtre (5) et la surface intérieure de l'une des deux couches de carton (3, 4) en étant ainsi intégrée directement dans la plaque de plâtre (2), et
- entre la couche chauffante (7) et la surface de la couche de carton (3, 4) il y a une couche intermédiaire (13) réalisée comme couche d'arrêt contre la migration de matière entre la couche chauffante (7) et la couche de carton (3, 4).

2. Plaque d'aménagement (1) selon la revendication 1,
**caractérisée par**
une seconde couche intermédiaire (19) entre le coeur en plâtre (5) et la couche chauffante (7) de l'élément chauffant plat (10), cette couche intermédiaire étant une couche d'arrêt contre la migration de matière entre la couche chauffante (7) et le coeur en plâtre (5).

3. Plaque d'aménagement (1) selon l'une des revendications 1 ou 2, **caractérisée par**
au moins une couche intermédiaire (13, 19) comportant une couche de polymère, par exemple, polyuréthane, acryle ou polyester et ayant une épaisseur de couche de 5 µm à 200 µm, de préférence, entre 10 µm et 50 µm.

4. Plaque d'aménagement (1) selon l'une des revendications 1 à 3, **caractérisée en ce que**
la couche intermédiaire (13) tournée vers la couche de carton (3, 4) est imprimée dans au moins la couche chauffante (7) sur le dessus de la couche de carton (3, 4).

5. Plaque d'aménagement (1) selon l'une des revendications 1 à 3, **caractérisée en ce que**
la couche intermédiaire (13) tournée vers la couche de carton (3, 4) est appliquée comme couche de vernis au moins dans la zone de la couche chauffante (7) sur le dessus de la couche de carton (3, 4).

6. Plaque d'aménagement (1) selon l'une des revendications 1 à 3, **caractérisée en ce que**
la couche intermédiaire (13) tournée vers la couche de carton (3, 4) est marouflée comme feuille sur le dessus de la couche de carton (3, 4) au moins dans la région de la couche chauffante (7).

7. Plaque d'aménagement (1) selon l'une des revendications 2 à 6, **caractérisée en ce que**
l'autre couche intermédiaire (19) est appliquée par impression, par pulvérisation ou par marouflage sous forme d'un film sur la couche chauffante (7) de l'élément chauffant plat (10).

8. Plaque d'aménagement (1) selon l'une des revendications 1 à 7, **caractérisée en ce que**
au moins la couche intermédiaire (13, 19) comporte une perforation perméable à la vapeur d'eau dans au moins des zones partielles.

9. Plaque d'aménagement (1) selon l'une des revendications 1 à 8, **caractérisée en ce que**
la couche chauffante (7) de l'élément chauffant plat (10) est sous la forme d'une matière de préférence imprimable, avec des particules électro-conductrices telles que graphite, carbone, fibres ou particules à l'échelle nanométrique telles que des nanotubes de carbone ou des graphènes.

10. Plaque d'aménagement (1) selon l'une des revendications 1 à 9, **caractérisée en ce que**
la couche chauffante (7) est sous la forme de bandes ou de filets entre les électrodes de branchement (6) et présente des zones de diffusion ouvertes dont la surface totale est de préférence supérieure à la surface totale de la matière résistante de la couche chauffante (7).

11. Plaque d'aménagement (1) selon l'une des revendications 1 à 10, **caractérisée en ce que**
le coeur en plâtre (5) comporte des additifs tels que, par exemple, graphite, fibres de carbone, graphènes ou nanotubes de carbone pour augmenter la conductivité thermique.

12. Plaque d'aménagement (1) selon l'une des revendications 1 à 11, **caractérisée en ce que**
le coeur en plâtre (5) comporte des additifs pour augmenter l'isolation thermique telle que des particules microporeuses, par exemple, perlite, microculite, billes de verre expansé ou générateur de mousse.

13. Procédé de réalisation d'une plaque d'aménagement (1) comportant un élément chauffant plat pour l'aménagement intérieur, ayant entre deux nappes de carton (3', 4'), une masse de plâtre pour former un coeur en plâtre (5),
**caractérisé en ce que**
avant d'appliquer une couche chauffante (7) de l'élément chauffant plat (10) sur la surface de dessus (9) tournée vers le coeur en plâtre (5) d'une bande de carton (3', 4') on imprime, on pulvérise ou on maroufle une couche intermédiaire (13) qui sert de couche d'arrêt contre la migration de matière entre la couche chauffante (7) et la bande de carton (3', 4').

14. Procédé selon la revendication 13,
**caractérisé en ce que**
on imprime, pulvérise ou maroufle sur la couche chauffante (7) de l'élément chauffant plat (10), une autre couche intermédiaire (19) qui sert de couche d'arrêt contre la migration de matière entre la couche chauffante (7) et le coeur de plâtre (5).
